(19) Europäisches Patentamt / European Patent Office / Office européen des brevets

(11) **EP 4 425 756 A1**

(12) **EUROPEAN PATENT APPLICATION**
published in accordance with Art. 153(4) EPC

(43) Date of publication:
**04.09.2024 Bulletin 2024/36**

(21) Application number: **21962446.7**

(22) Date of filing: **29.10.2021**

(51) International Patent Classification (IPC):
**H02K 1/278** (2022.01)

(52) Cooperative Patent Classification (CPC):
**H02K 1/278; Y02T 10/64**

(86) International application number:
**PCT/JP2021/039955**

(87) International publication number:
**WO 2023/073901 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku
Tokyo 100-8310 (JP)**

(72) Inventors:
• **MOTOYOSHI, Kenta**
**Tokyo 100-8310 (JP)**
• **IKEDA, Hiroko**
**Tokyo 100-8310 (JP)**
• **NISHIMURA, Yuki**
**Tokyo 100-8310 (JP)**
• **YAMAMOTO, Takashi**
**Tokyo 100-8310 (JP)**
• **OKAZAKI, Masafumi**
**Tokyo 100-8310 (JP)**
• **FUJIKURA, Shohei**
**Tokyo 100-8310 (JP)**

(74) Representative: **Hoffmann Eitle
Patent- und Rechtsanwälte PartmbB
Arabellastraße 30
81925 München (DE)**

(54) **ROTOR AND PERMANENT MAGNET SYCHRONOUS MOTOR**

(57) A rotor includes a rotor core, a shaft which is disposed inside the rotor core and extends in an axial direction, and a plurality of permanent magnets which are provided in the rotor core, in which the rotor core is provided with a lightening hole, and a number of the lightening hole is different from a number of pole pairs of the plurality of permanent magnets.

FIG. 1

EP 4 425 756 A1

## Description

[Technical Field]

The present disclosure relates to a rotor and a permanent magnet synchronous motor.

[Background Art]

Conventionally, a permanent magnet synchronous motor is known as a motor used in an in-vehicle device used in an electric automobile and the like, a compressor used in an air conditioner and the like, and an industrial machine. The permanent magnet synchronous motor includes a stator and a rotor which is rotatably provided in the stator. The rotor includes a rotor core and a plurality of permanent magnets provided in the rotor core. In Patent Document 1, a lightening hole is provided in the rotor core in order to reduce the weight of the rotor.

[Citation List]

[Patent Document]

[Patent Document 1]
Japanese Unexamined Patent Application, First Publication No. 2015-47051

[Summary of Invention]

[PROBLEM TO BE SOLVED BY THE INVENTION]

Since the lightening hole is provided in the rotor core, there is a possibility that cogging torque or torque pulsation may be generated. In the permanent magnet synchronous motor, it is required to reduce the cogging torque and the torque pulsation.
The present disclosure has been made to solve the above-described problems and an object thereof is to provide a rotor and a permanent magnet synchronous motor capable of reducing cogging torque and torque pulsation while reducing weight.

[MEANS TO SOLVE THE PROBLEM]

A rotor according to the present disclosure includes a rotor core, a shaft which is disposed inside the rotor core and extends in an axial direction, and a plurality of permanent magnets which are provided in the rotor core, in which the rotor core is provided with a lightening hole, and a number of the lightening hole is different from a number of pole pairs of the plurality of permanent magnets.
A permanent magnet synchronous motor according to the present disclosure includes the rotor, and a stator which is provided to surround the outer periphery of the rotor.

[EFFECTS OF THE INVENTION]

According to the present disclosure, it is possible to provide a rotor and a permanent magnet synchronous motor capable of reducing cogging torque or torque pulsation while reducing weight.

[Brief Description of Drawings]

FIG. 1 is a cross-sectional view of a permanent magnet synchronous motor according to Embodiment 1.
FIG. 2 is a diagram showing a magnetic flux density distribution of a 1/2 model of a permanent magnet synchronous motor according to Example 1.
FIG. 3 is a cross-sectional view of a permanent magnet synchronous motor according to Comparative Example.
FIG. 4 is a diagram showing a magnetic flux density distribution of a 1/2 model of the permanent magnet synchronous motor according to Comparative Example.
FIG. 5 is a graph showing torque waveform variation components obtained by the permanent magnet synchronous motors according to Example 1 and Comparative Example.
FIG. 6 is a diagram showing a magnetic flux density distribution of a 1/2 model of a permanent magnet synchronous motor according to Example 2.
FIG. 7 is a diagram showing a magnetic flux density distribution of a 1/2 model of a permanent magnet synchronous motor according to Example 3.
FIG. 8 is a graph showing torque waveform variation components obtained by the permanent magnet synchronous motors according to Examples 1 to 3.
FIG. 9 is a cross-sectional view of a rotor according to Embodiment 2.
FIG. 10 is a diagram showing a magnetic flux density distribution of a 1/2 model of a permanent magnet synchronous motor according to Example 4.
FIG. 11 is a diagram showing a magnetic flux density distribution of a 1/2 model of a permanent magnet synchronous motor according to Example 5.
FIG. 12 is a diagram showing a magnetic flux density distribution of a 1/2 model of a permanent magnet synchronous motor according to Example 6.
FIG. 13 is a graph showing torque waveform variation components obtained by the permanent magnet synchronous motors according to Examples 4 to 6.
FIG. 14 is a cross-sectional view of a rotor according to Embodiment 3.
FIG. 15 is a diagram showing a magnetic flux density distribution of a permanent magnet synchronous motor according to Example 7.
FIG. 16 is a diagram showing a magnetic flux density distribution of a permanent magnet synchronous motor according to Example 8.

FIG. 17 is a graph showing torque waveform variation components obtained by the permanent magnet synchronous motors according to Examples 7 and 8.

FIG. 18 is a cross-sectional view of a rotor according to Embodiment 5.

FIG. 19 is a diagram showing a magnetic flux density distribution of a 1/2 model of a permanent magnet synchronous motor according to Example 9.

FIG. 20 is a cross-sectional view of a rotor according to Modified Example of Embodiment 5.

FIG. 21 is a diagram showing a magnetic flux density distribution of a 1/2 model of a permanent magnet synchronous motor according to Example 10.

FIG. 22 is a graph showing torque waveform variation components obtained by the permanent magnet synchronous motors according to Examples 9 and 10.

[Description of Embodiments]

Embodiment 1.

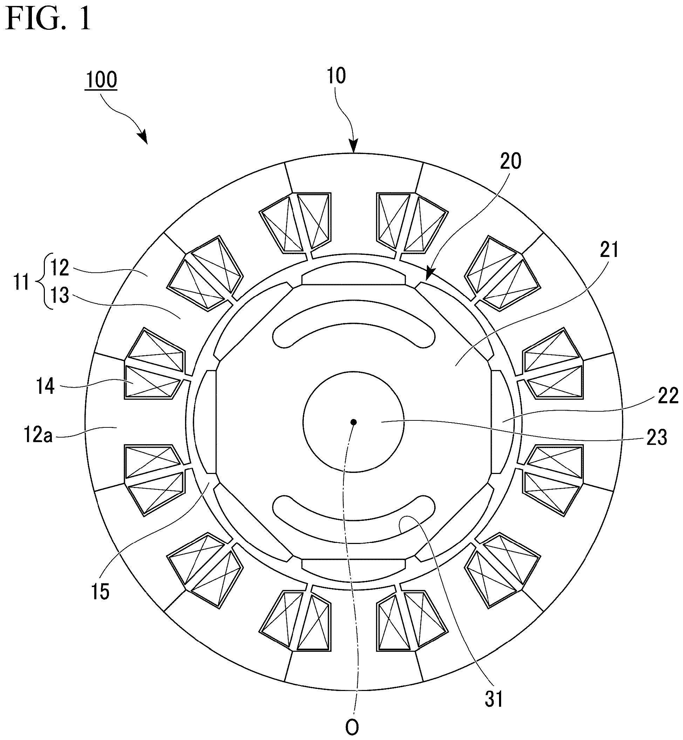

FIG. 1 is a cross-sectional view of a permanent magnet synchronous motor 100 of Embodiment 1 cut in a direction perpendicular to the axial direction. The permanent magnet synchronous motor 100 includes a stator 10 and a rotor 20 which is provided inside the stator 10. The rotor 20 is rotatable around an axis O with respect to the stator 10.

In the present specification, a direction along the axis O of the rotor 20 is referred to as an "axial direction". Further, a section perpendicular to the axial direction is referred to as a "cross-section". In the cross-section, a direction intersecting the axis O is referred to as a "radial direction" and a direction around the axis O is referred to as a "circumferential direction".

The stator 10 is provided to surround the outer periphery of the rotor 20. An air gap 15 is formed between the inner periphery of the stator 10 and the outer periphery of the rotor 20. The air gap 15 is formed over the entire circumference in the circumferential direction.

The stator 10 includes a stator core 11 and a plurality of windings 14. The stator core 11 includes an annular core back 12 and a plurality of teeth 13. The core back 12 includes a plurality of core blocks 12a which are formed in an arc shape along the circumferential direction and is formed in an annular shape by arranging the core blocks 12a in the circumferential direction. Each tooth 13 protrudes inward in the radial direction from the circumferential center of each core block 12a. Each winding 14 is wound around each of the plurality of teeth 13.

In the configuration shown in FIG. 1, the core back 12 is formed by the plurality of core blocks 12a. However, the core back 12 may be integrally formed in an annular shape. Further, in the configuration shown in FIG. 1, the core back 12 and the plurality of teeth 13 are integrally formed with each other. However, the core back 12 and the plurality of teeth 13 may both be individually formed.

The rotor 20 includes a rotor core 21, a plurality of permanent magnets 22, and a shaft 23. The rotor core 21 has a cylindrical shape extending in the axial direction. The rotor core 21 is formed of a magnetic material. The rotor core 21 is formed, for example, by stacking a plurality of core plates such as electromagnetic steel plates in the axial direction. The shaft 23 is disposed inside the rotor core 21 and extends in the axial direction. The shaft 23 is fixed to the rotor core 21.

The plurality of permanent magnets 22 are provided on the outer peripheral surface of the rotor core 21 at intervals in the circumferential direction. The plurality of permanent magnets 22 are arranged at equal intervals in the circumferential direction. Each permanent magnet 22 is magnetized such that an S pole or an N pole appears on an outer peripheral surface (a surface facing the stator 10) thereof. The permanent magnets 22 which are adjacent to each other in the circumferential direction are magnetized such that the poles appearing on their outer peripheral surfaces are different from each other. That is, when the outer peripheral surface of one of the circumferentially adjacent permanent magnets 22 is an N pole, the outer peripheral surface of the other thereof is an S pole. The permanent magnet synchronous motor 100 of this embodiment is a surface permanent magnetic (SPM) motor in which the plurality of permanent magnets 22 are arranged on the outer peripheral surface of the rotor core 21.

In the configuration shown in FIG. 1, the number of the teeth 13 is 12. The number of the windings 14 is 12. The number Nm of the permanent magnets 22 (that is, the number of magnetic poles) is 8. Further, the number Pm of pole pairs of the permanent magnets 22 having pairs of N and S poles is 4. That is, the permanent magnet synchronous motor 100 in this embodiment is a so-called 8-pole/12-slot motor.

The numbers of the teeth 13, the windings 14, and the permanent magnets 22 are not limited thereto. The number of the teeth 13 may be different from the number of the windings 14.

The rotor core 21 is provided with a plurality of lightening holes 31. Since the lightening holes 31 are provided, the weight of the rotor 20 can be reduced and the inertia moment of the rotor 20 can be reduced.

The lightening hole 31 is formed to penetrate the rotor core 21 in the axial direction. The lightening hole 31 is formed in an arc shape along the circumferential direction. The plurality of lightening holes 31 are arranged at equal intervals in the circumferential direction. The plurality of lightening holes 31 have the same shape. The lightening hole 31 is disposed on the inside of the permanent magnet 22 in the radial direction. The lightening hole 31 is disposed such that the circumferential center of the lightening hole 31 and the circumferential center of the permanent magnet 22 coincide with each other in the circumferential direction. The lightening hole 31 is formed symmetrically with respect to a line connecting the axis O of the shaft 23 and the circumferential center of the lightening hole 31.

In this embodiment, the number Nl of the lightening holes 31 is 2. That is, the number N1 of the lightening holes 31 is different from the number Pm of pole pairs of the permanent magnets 22. The number N1 of the lightening holes 31 is smaller than the number Pm of pole pairs of the permanent magnets 22. Further, the number Nl of the lightening holes 31 is also different from the number Nm of the permanent magnets 22.

The operation of the permanent magnet synchronous motor 100 will be described.

When power is supplied to the windings 14, a rotating magnetic field is generated in the stator 10. The permanent magnets 22 rotate while following this rotating magnetic field. Accordingly, the rotor 20 rotates around the axis O with respect to the stator 10.

As shown in the following formula (1), the torque T of the permanent magnet synchronous motor 100 is obtained by differentiating the magnetic energy Wm within the air gap 15 between the stator 10 and the rotor 20 by the rotation angle θ.

$$T= \partial Wm/\partial \theta \ \dots \ (1)$$

Further, as shown in the following formula (2), the magnetic energy Wm is obtained by the magnetic flux density Bg and the magnetic permeability $\mu_0$ in the air gap 15.

$$Wm= \int (Bg^2/2\mu_0)d\phi \ \dots \ (2)$$

The magnetic flux density Bg in the air gap 15 is determined by the magnetomotive force generated by the windings 14, the shape of the stator 10, the magnetic flux generated by the permanent magnets 22, and the like. Further, when there are manufacturing variations (for example, variations in dimensions, arrangement, magnetization, and the like between the plurality of permanent magnets 22) in the rotor 20, distortion may occur in the magnetic flux density Bg in the air gap 15 and hence cogging torque or torque pulsation may occur.

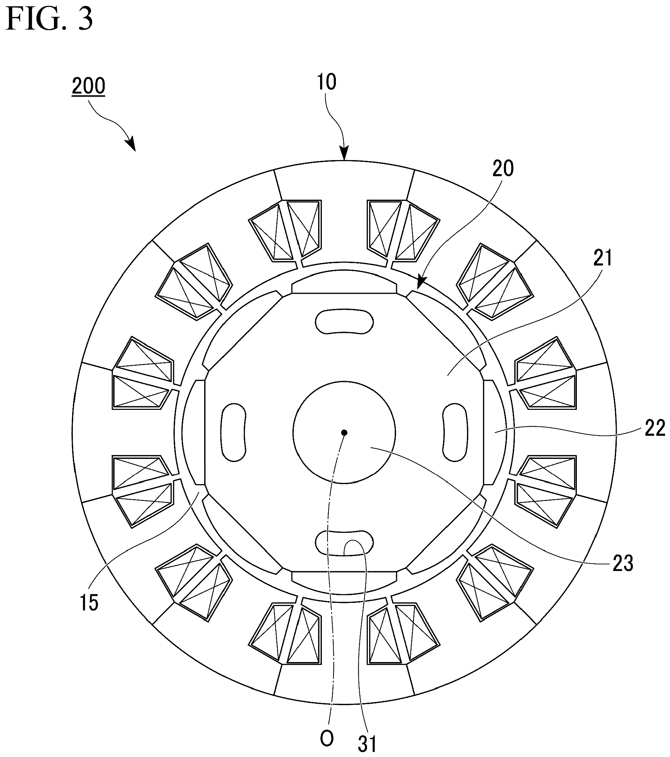

The operation of the permanent magnet synchronous motor 100 according to this embodiment will be described by the comparison with Comparative Example shown in FIG. 3. FIG. 3 is a cross-sectional view of a permanent magnet synchronous motor 200 according to Comparative Example. In the permanent magnet synchronous motor 200, the rotor core 21 is provided with four lightening holes 31. That is, in Comparative Example, the number Nl of the lightening holes 31 is the same as the number Pm of pole pairs of the permanent magnets 22.

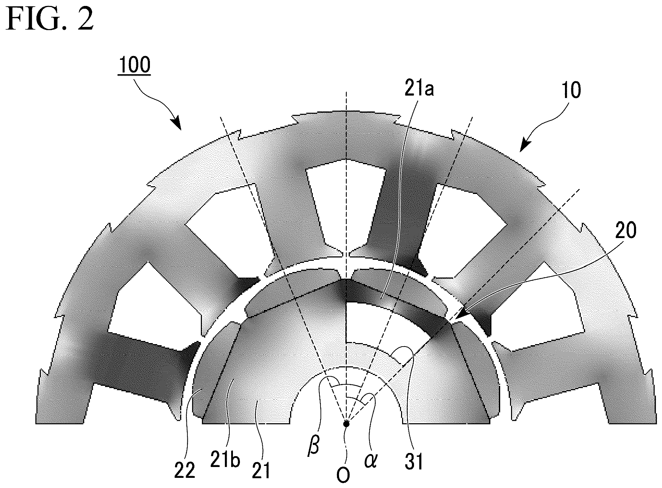

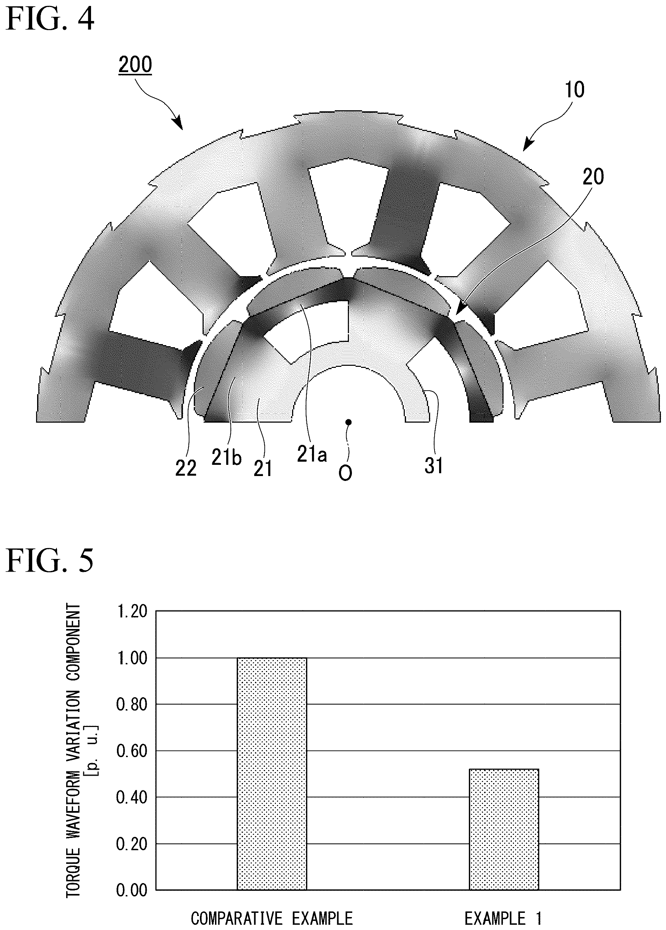

FIG. 2 is a diagram showing a magnetic flux density distribution of a 1/2 model of the permanent magnet synchronous motor 100 according to Example 1 as an example of this embodiment. FIG. 4 is a diagram showing a magnetic flux density distribution of a 1/2 model of the permanent magnet synchronous motor 200 according to Comparative Example. The 1/2 model is a model showing one-half of the permanent magnet synchronous motor 100 or 200 divided in the circumferential direction. Since the permanent magnet synchronous motors 100 and 200 have two-fold symmetry with respect to the axis O, the analysis is performed using the 1/2 model. In FIGS. 2 and 4, the magnetic flux density becomes higher as the color becomes darker and the magnetic flux density becomes lower as the color becomes lighter.

As shown in FIG. 2, in Example 1, when a first separation angle around the axis O between both ends of the lightening hole 31 in the circumferential direction is α and a second separation angle around the axis O between the centers of the permanent magnets 22 adjacent to each other in the circumferential direction is β, the first separation angle α is the same as the second separation angle β. Additionally, when the number of the permanent magnets 22 is Nm, the second separation angle β is 360°/Nm.

As shown in FIGS. 2 and 4, in the outer peripheral portion of the rotor core 21, the magnetic flux density of a portion 21a located between the lightening hole 31 and the permanent magnet 22 is higher than the magnetic flux density of the other portion 21b. At this time, the specific magnetic permeability of the portion 21a located between the lightening hole 31 and the permanent magnet 22 is smaller than the specific magnetic permeability of the other portion 21b. The magnetic resistance of the portion 21a located between the lightening hole 31 and the permanent magnet 22 is larger than the magnetic resistance of the other portion 21b. Thus, the permeance coefficient of the permanent magnet 22 facing the lightening hole 31 is smaller than the permeance coefficient of the other permanent magnets 22. The magnetic flux generated by the permanent magnet 22 facing the lightening hole 31 is smaller than the magnetic flux generated by the other permanent magnet 22. That is, even when there is no manufacturing variation in the rotor 20, variations in characteristics among the plurality of permanent magnets 22 are caused by providing the lightening holes 31. As a result, distortion occurs in the magnetic flux density of the air gap 15, and cogging torque or torque pulsation is generated. The cogging torque or the torque pulsation generated in this way includes a harmonic component that matches the number of the teeth 13 (for example, when the number of the teeth 13 is 12, a 12th harmonic component) per mechanical angle rotation.

In the permanent magnet synchronous motor 200 according to Comparative Example, the number Nl of the lightening holes 31 is the same as the number Pm of pole pairs of the permanent magnets 22. Thus, as shown in FIG. 4, a portion (the portion 21a located between the lightening hole 31 and the permanent magnet 22) in which the magnetic flux density is relatively high and a portion (the other portion 21b) in which the magnetic flux density is relatively low appear alternately for each pole in the outer peripheral portion of the rotor core 21. Further, the change in magnetic flux density over the entire outer peripheral portion of the rotor core 21 increases. That is, the magnetic flux generated by the permanent magnets 22 increases and decreases periodically for each pole. Further, the change in magnetic flux generated by the permanent magnets 22 increases. As a result, the distortion of the magnetic flux density in the air gap 15 increases, and the cogging torque or the torque pulsation increases.

Additionally, the 8-pole/12-slot permanent magnet synchronous motor is configured with circumferentially adjacent two permanent magnets 22 and three teeth 13 (two poles and three slots) as a basic unit. Therefore, the difference in characteristics of two permanent magnets 22 adjacent to each other in the circumferential direction has a large effect on the generation of the cogging torque or the torque pulsation. In the permanent magnet synchronous motor 200 according to Comparative Example, the magnetic flux generated by the permanent magnets 22 increases and decreases periodically for each pole. Thus, since the difference in characteristics between the two permanent magnets 22 adjacent to each other in the circumferential direction increases, the cogging torque or the torque pulsation further increases.

On the other hand, in the permanent magnet synchronous motor 100 according to Example 1, the number N1 of the lightening holes 31 is different from the number Pm of pole pairs of the permanent magnets 22. Thus, as shown in FIG. 2, a portion (the portion 21a between the lightening hole 31 and the permanent magnet 22) in which the magnetic flux density is relatively high and a portion (the other portion 21b) in which the magnetic flux density is relatively low exist in the outer peripheral portion of the rotor core 21, but the change in magnetic flux density over the entire outer peripheral portion of the rotor core 21 decreases compared to Comparative Example. Further, it is possible to prevent a portion in which the magnetic flux density is relatively high and a portion in which the magnetic flux density is relatively low from appearing alternately for each pole in the outer peripheral portion of the rotor core 21. Thus, the change in magnetic flux generated by the permanent magnets 22 decreases compared to Comparative Example. Further, the magnetic flux generated by the permanent magnets 22 does not periodically increase and decrease for each pole. As a result, it is possible to reduce distortion of the magnetic flux density in the air gap 15 and to reduce the cogging torque, the torque pulsation and the like.

FIG. 5 is a graph showing a torque waveform variation component obtained by the permanent magnet synchronous motor 100 according to Example 1 and a torque waveform variation component obtained by the permanent magnet synchronous motor 200 according to Comparative Example. The vertical axis of the graph in FIG. 5 indicates the torque waveform variation component [p.u.] normalized based on the torque waveform variation component obtained by the permanent magnet synchronous motor 200 according to Comparative Example. The torque waveform variation component of the present disclosure is a harmonic component that occurs in the torque waveform due to variation in characteristics between the plurality of permanent magnets 22. The torque waveform variation component in FIG. 5 is obtained by dividing the torque waveform obtained from electromagnetic field analysis into multiple harmonic components by Fourier series expansion and extracting the value of the 12th harmonic component from these multiple harmonic components. The cogging torque and the torque pulsation increase as the torque waveform variation component increases.

As shown in FIG. 5, in the permanent magnet synchronous motor 100 according to Example 1, it can be confirmed that the torque waveform variation component decreases by about 50% compared to the permanent magnet synchronous motor 200 according to Comparative Example. That is, in the permanent magnet synchronous motor 100 according to Example 1, it can be seen that the cogging torque and the torque pulsation can be reduced.

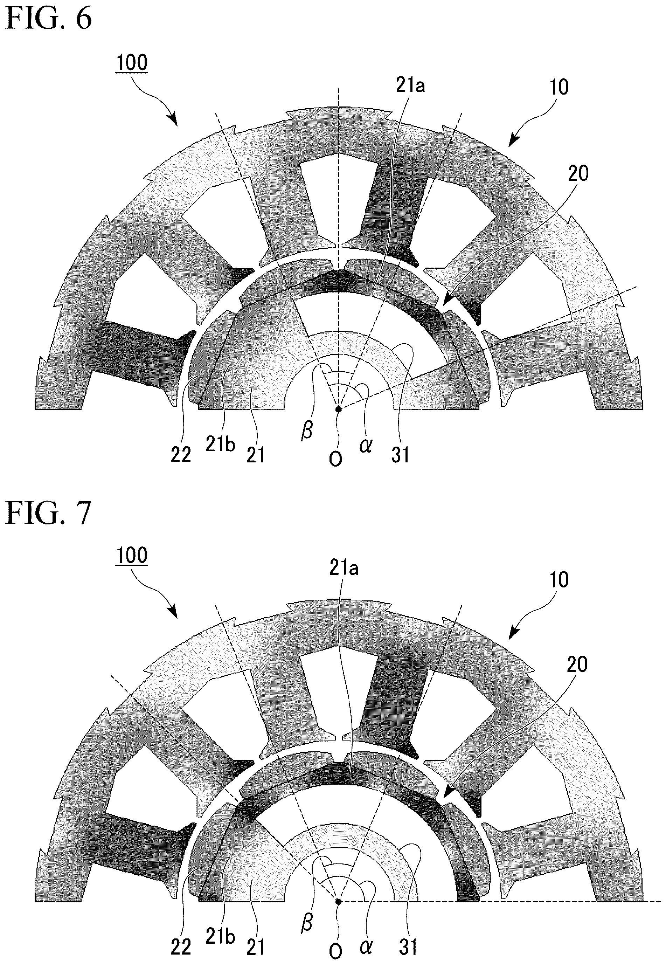

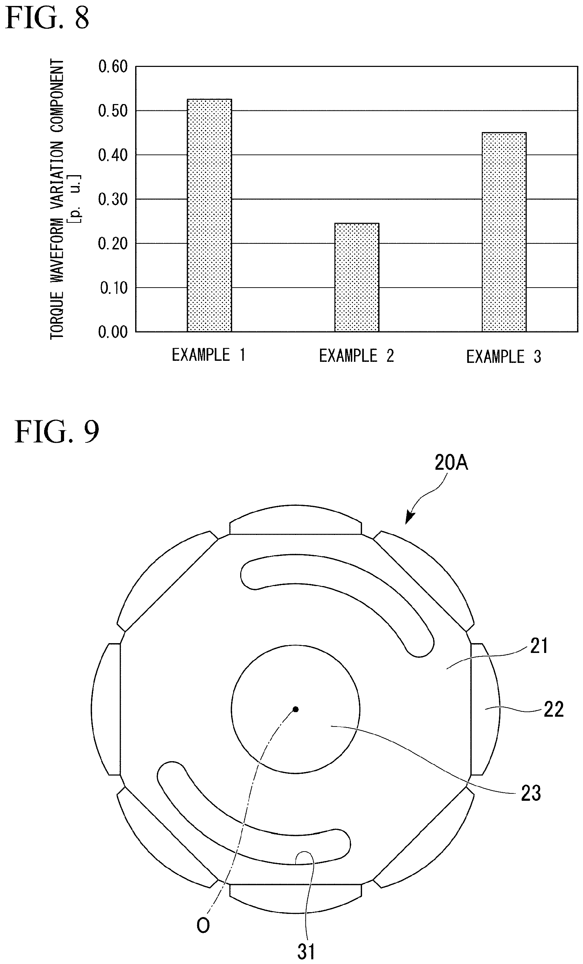

FIG. 6 is a diagram showing a magnetic flux density distribution of a 1/2 model of the permanent magnet synchronous motor 100 according to Example 2 as an example of this embodiment. FIG. 7 is a diagram showing a magnetic flux density distribution of a 1/2 model of the permanent magnet synchronous motor 100 according to Example 3 as an example of this embodiment. FIG. 8 is a graph showing a torque waveform variation component obtained by the permanent magnet synchronous motor 100 according to Examples 1 to 3. The vertical axis of the graph in FIG. 8 indicates the torque waveform variation component [p.u.] normalized based on the torque waveform variation component obtained by the permanent magnet synchronous motor 200 according to Comparative Example.

As shown in FIG. 6, in Example 2, the first separation angle α is twice the second separation angle β. As shown in FIG. 7, in Example 3, the first separation angle α is three times the second separation angle β. In Examples 2 and 3, the lightening hole 31 is disposed across three permanent magnets 22.

As shown in FIGS. 6 and 7, in the permanent magnet synchronous motor 100 according to Examples 2 and 3, the change in magnetic flux density over the entire outer peripheral portion of the rotor core 21 decreases compared to Comparative Example. Further, as shown in FIG. 8, in the permanent magnet synchronous motor 100 according to Example 2, it can be confirmed that the torque waveform variation component decreases by about 75% compared to the permanent magnet synchronous motor 200 according to Comparative Example. In the permanent magnet synchronous motor 100 according to Example 3, it can be confirmed that the torque waveform variation component decreases by about 55% compared to the permanent magnet synchronous motor 200 according to Comparative Example. Thus, in the permanent magnet synchronous motor 100 according to Examples 2 and 3, it can be seen that the cogging torque and the torque pulsation can be reduced. As described above, when the lightening hole 31 is formed such that the first separation angle $\alpha$ satisfies $\beta \leq \alpha \leq 3\beta$, it can be seen that the cogging torque and the torque pulsation can be more effectively reduced.

As described above, the rotor 20 according to this embodiment includes the rotor core 21, the shaft 23 which is disposed inside the rotor core 21 and extends in the axial direction, and the plurality of permanent magnets 22 which are provided in the rotor core 21. The rotor core 21 is provided with the lightening hole 31. The number N1 of the lightening holes 31 is different from the number Pm of pole pairs of the permanent magnets 22. With this configuration, it is possible to reduce the cogging torque and the torque pulsation while decreasing the weight of the rotor 20.

Further, when the first separation angle around the axis O between both ends of the lightening hole 31 in the circumferential direction is $\alpha$ and the second separation angle around the axis O between the centers of the permanent magnets 22 adjacent each other in the circumferential direction is $\beta$, the lightening hole 31 is provided to satisfy $\beta \leq \alpha \leq 3\beta$. With this configuration, it is possible to more effectively reduce the cogging torque and the torque pulsation. Further, it is possible to enlarge the lightening hole 31 and to more reliably reduce the weight of the rotor 20.

Embodiment 2.

FIG. 9 is a cross-sectional view showing a rotor 20A according to Embodiment 2. Although not shown in the drawings, the stator 10 is provided on the outer peripheral side of the rotor 20A with the air gap 15 interposed therebetween (see FIG. 1). Additionally, components having the same functions and operations as those in Embodiment 1 are indicated by the same reference numerals and descriptions thereof are omitted.

As shown in FIG. 9, in Embodiment 2, the lightening hole 31 is disposed such that the circumferential center of the lightening hole 31 and the intermediate position of the permanent magnets 22 adjacent to each other in the circumferential direction coincide with each other in the circumferential direction. The lightening hole 31 is formed symmetrically with respect to a line connecting the axis O and the circumferential center of the lightening hole 31 (that is, a line connecting the axis O and the intermediate position of the permanent magnets 22 adjacent to each other in the circumferential direction). Further, in this embodiment, the rotor core 21 is provided with two lightening holes 31 and the number N1 of the lightening holes 31 is different from the number Pm of pole pairs of the permanent magnets 22 similar to Embodiment 1.

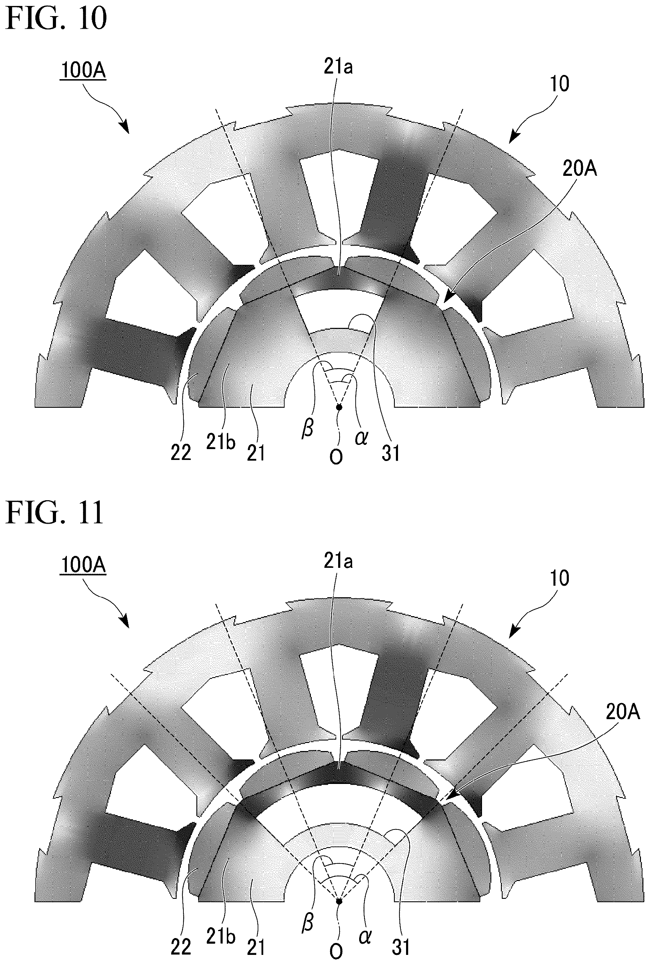

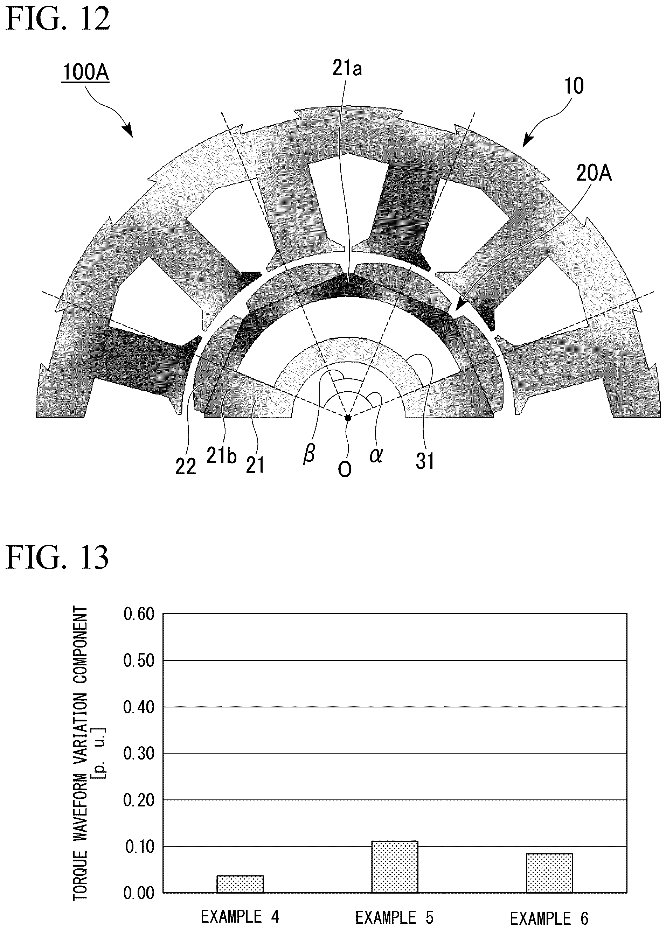

FIG. 10 is a diagram showing a magnetic flux density distribution of a 1/2 model of a permanent magnet synchronous motor 100A according to Example 4 as an example of this embodiment. FIG. 11 is a diagram showing a magnetic flux density distribution of a 1/2 model of the permanent magnet synchronous motor 100A according to Example 5 as an example of this embodiment. FIG. 12 is a diagram showing a magnetic flux density distribution of a 1/2 model of the permanent magnet synchronous motor 100A according to Example 6 as an example of this embodiment. FIG. 13 is a graph showing a torque waveform variation component obtained by the permanent magnet synchronous motor 100A according to Examples 4 to 6. The vertical axis of the graph in FIG. 13 indicates the torque waveform variation component [p.u.] normalized based on the torque waveform variation component obtained by the permanent magnet synchronous motor 200 according to Comparative Example.

As shown in FIG. 10, in Example 4, the first separation angle $\alpha$ is the same as the second separation angle $\beta$. As shown in FIG. 11, in Example 5, the first separation angle $\alpha$ is twice the second separation angle $\beta$. In Examples 4 and 5, the lightening hole 31 is disposed across two permanent magnets 22. As shown in FIG. 12, in Example 6, the first separation angle $\alpha$ is three times the second separation angle $\beta$. In Example 6, the lightening hole 31 is disposed across four permanent magnets 22.

As shown in FIGS. 10 to 12, in the permanent magnet synchronous motor 100A according to Examples 4 to 6, the change in magnetic flux density of the outer peripheral portion of the rotor core 21 decreases compared to Comparative Example. Further, as shown in FIG. 13, in the permanent magnet synchronous motor 100A according to Examples 4 to 6, it can be confirmed that the torque waveform variation component decreases by about 90% compared to the permanent magnet synchronous motor 200 according to Comparative Example. Thus, in Examples 4 to 6, it can be seen that the cogging torque and the torque pulsation can be reduced.

Further, when comparing FIGS. 5 and 13, it can be confirmed that the torque waveform variation component further decreases in the permanent magnet synchronous motor 100A according to Examples 4 to 6.

As described above, in the 8-pole/12-slot permanent magnet synchronous motor, the difference in characteristics of two permanent magnets 22 adjacent to each other in the circumferential direction has a large effect on the generation of the cogging torque and the torque pulsation. In this embodiment, the center of the lightening hole 31 in the circumferential direction and the intermediate position of the permanent magnets 22 adjacent to each other in the circumferential direction coincide with each other in the circumferential direction and the lightening hole 31 is formed symmetrically with respect to a line connecting the axis O and the intermediate position of the permanent magnets 22 adjacent to each other in the circumferential direction. Thus, since the change in magnetic flux density in the outer peripheral portion of the rotor core 21 is symmetrical with respect to the above line for the permanent magnets 22 which are adjacent to each other in the circumferential direction with the circumferential center of the lightening hole 31 interposed therebetween, the difference in characteristics between these two permanent magnets 22 decreases. As a result, it is possible to more effectively reduce the cogging torque and the torque pulsation.

As described above, in the rotor 20A according to this embodiment, the lightening hole 31 is disposed such that the center of the lightening hole 31 in the circumferential direction and the intermediate position of the permanent magnets 22, of the plurality of permanent magnets 22, adjacent to each other in the circumferential direction coincide with each other in the circumferential direction. With this configuration, it is possible to more effectively reduce the cogging torque and the torque pulsation.

Embodiment 3.

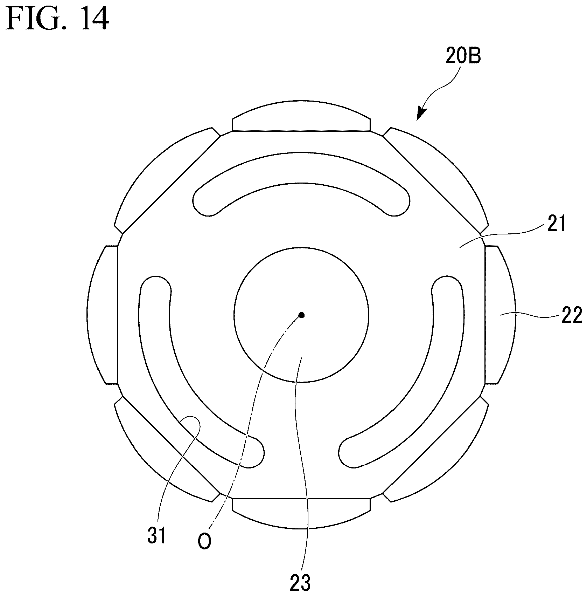

FIG. 14 is a cross-sectional view showing a rotor 20B according to Embodiment 3. Although not shown in the drawings, the stator 10 is provided on the outer peripheral side of the rotor 20B with the air gap 15 interposed therebetween (see FIG. 1). Additionally, components having the same functions and operations as those in Embodiment 1 are indicated by the same reference numerals and descriptions thereof are omitted.

As shown in FIG. 14, in Embodiment 3, the rotor core 21 is provided with three lightening holes 31. Three lightening holes 31 are arranged at equal intervals in the circumferential direction.

In this embodiment, the number N1 of the lightening holes 31 is 3. The number N1 of the lightening holes 31 is different from the number Pm of pole pairs of the permanent magnets 22. The number N1 of the lightening holes 31 is smaller than the number Pm of pole pairs of the permanent magnets 22. Further, the number N1 of the lightening holes 31 is also different from the number Nm of the permanent magnets 22.

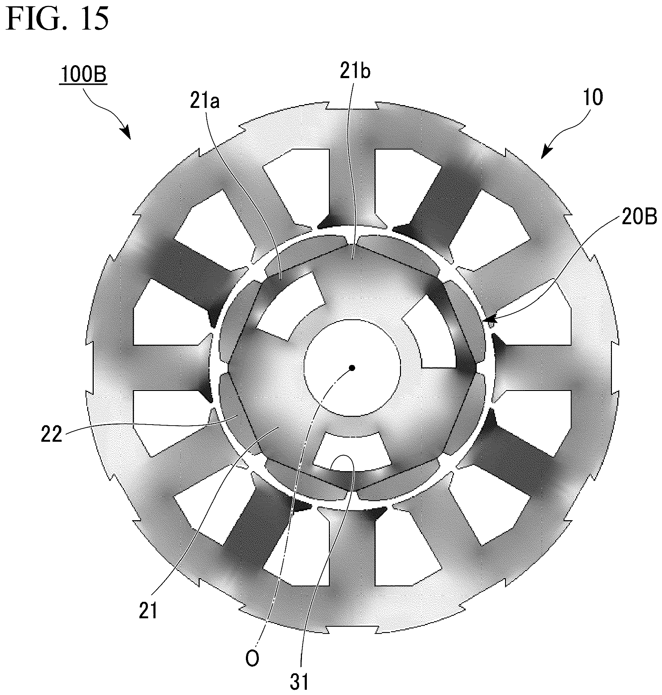

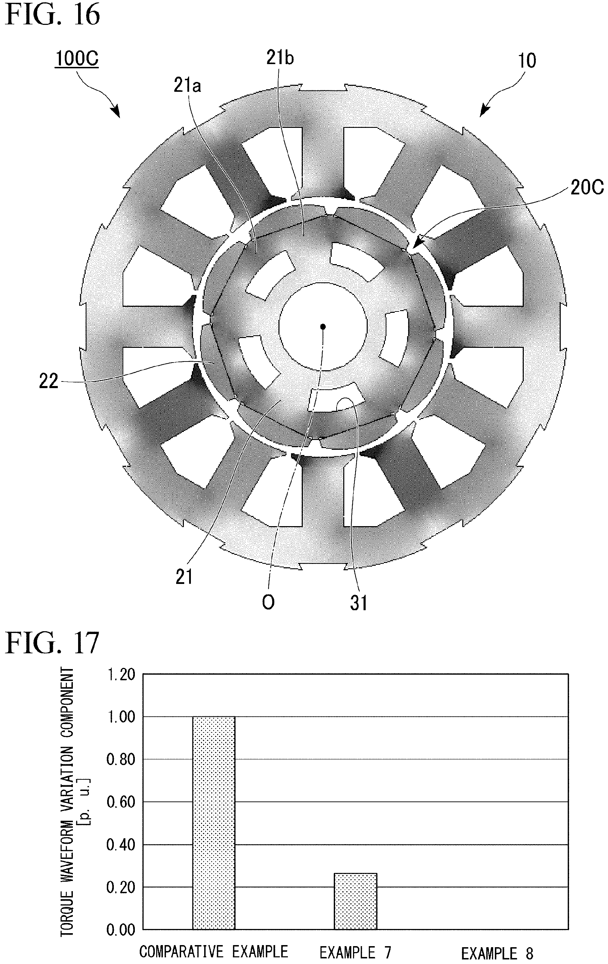

FIG. 15 is a diagram showing a magnetic flux density distribution of a permanent magnet synchronous motor 100B according to Example 7 as an example of this embodiment. FIG. 17 is a graph showing a torque waveform variation component obtained by the permanent magnet synchronous motor 100B according to Example 7. The vertical axis of the graph in FIG. 17 indicates the torque waveform variation component [p.u.] normalized based on the torque waveform variation component obtained by the permanent magnet synchronous motor 200 according to Comparative Example.

As shown in FIG. 15, in the permanent magnet synchronous motor 100B according to Example 7, the change in magnetic flux density of the outer peripheral portion of the rotor core 21 decreases compared to Comparative Example. Further, as shown in FIG. 17, in the permanent magnet synchronous motor 100B according to Example 7, it can be confirmed that the torque waveform variation component decreases by about 70% compared to the permanent magnet synchronous motor 200 according to Comparative Example. Thus, in Example 7, it can be seen that the cogging torque and the torque pulsation can be reduced.

Further, when comparing FIGS. 5 and 17, it can be confirmed that the torque waveform variation component further decreases in the permanent magnet synchronous motor 100B according to Example 7.

In the permanent magnet synchronous motor 100B, as the number N1 of the lightening holes 31 is increased, it is possible to further suppress variations in magnetic flux density in the outer peripheral portion of the rotor core 21 and to further decrease the change in magnetic flux generated by the permanent magnets 22. As a result, it is possible to further reduce the distortion of the magnetic flux density in the air gap 15 and to further reduce the cogging torque and the torque pulsation.

Embodiment 4.

FIG. 16 is a diagram showing a magnetic flux density distribution of a permanent magnet synchronous motor 100C according to Example 8 as an example of this embodiment. FIG. 17 is a graph showing a torque waveform variation component obtained by the permanent magnet synchronous motor 100C according to Example 8. Additionally, components having the same functions and operations as those in Embodiment 1 are indicated by the same reference numerals and descriptions thereof are omitted.

As shown in FIG. 16, in Embodiment 4, the rotor core 21 of the rotor 20C is provided with five lightening holes 31. Five lightening holes 31 are arranged at equal intervals in the circumferential direction.

In this embodiment, the number N1 of the lightening holes 31 is 5. The number N1 of the lightening holes 31 is different from the number Pm of pole pairs of the permanent magnets 22. The number N1 of the lightening holes 31 is larger than the number Pm of pole pairs of the permanent magnets 22. Further, the number N1 of the lightening holes 31 is also different from the number Nm of the permanent magnets 22.

As shown in FIG. 16, in the permanent magnet synchronous motor 100C according to Example 8, the change in magnetic flux density in the outer peripheral portion of the rotor core 21 decreases compared to Comparative Example. Further, as shown in FIG. 17, in the permanent magnet synchronous motor 100C according to Example 8, it can be confirmed that the torque waveform variation component remarkably decreases compared to the permanent magnet synchronous motor 200 according to Comparative Example. Thus, in Example 8, it can be seen that the cogging torque and the torque pulsation can be reduced.

Further, when comparing FIGS. 5 and 17, it can be confirmed that the torque waveform variation component is further reduced in the permanent magnet synchronous motor 100C according to Example 8.

In the permanent magnet synchronous motor 100C, the number N1 of the lightening holes 31 is larger than the number Pm of pole pairs of the permanent magnets 22. Accordingly, variations in magnetic flux density in the outer peripheral portion of the rotor core 21 are further suppressed and the change in magnetic flux generated by the permanent magnet 22 is further reduced. As a result, it is possible to further reduce the distortion of the magnetic flux density in the air gap 15 and to further reduce the cogging torque and the torque pulsation.

Embodiment 5.

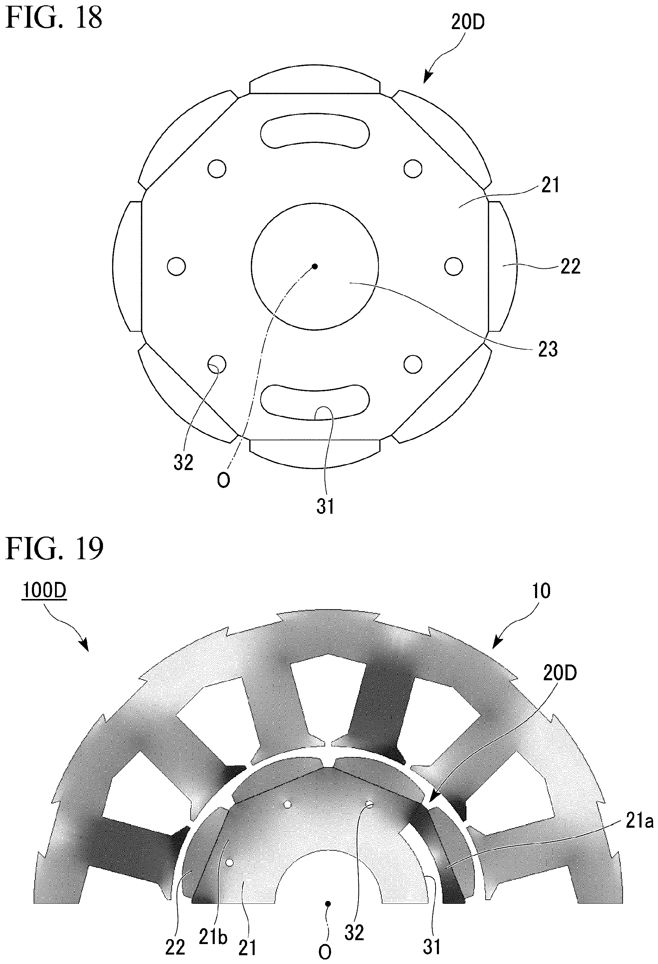

FIG. 18 is a cross-sectional view showing a rotor 20D according to Embodiment 5. Although not shown in the drawings, the stator 10 is provided on the outer peripheral side of the rotor 20D with the air gap 15 interposed therebetween (see FIG. 1). Additionally, components having the same functions and operations as those in Embodiment 1 are indicated by the same reference numerals and descriptions thereof are omitted.

As shown in FIG. 18, in Embodiment 5, the rotor core 21 is provided with a plurality of positioning holes 32 in addition to the lightening holes 31. The rotor core 21 includes a plurality of core plates which are stacked in the axial direction. In order to ensure uniformity of the rotor core 21 in the circumferential direction, the plurality of core plates are stacked while shifting the angle of each core plate (that is, the plurality of core plates are rotated and stacked). By providing the positioning holes 32, the relative positions of the core plates can be easily adjusted when the plurality of core plates are rotated and stacked.

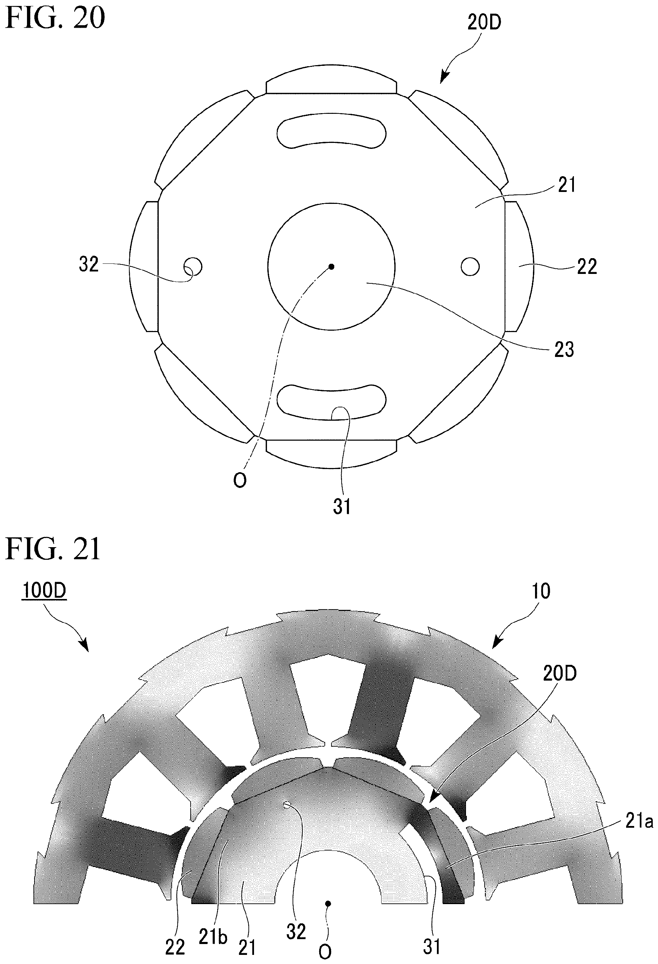

In the configuration shown in FIG. 18, the rotor core 21 is provided with two lightening holes 31 and six positioning holes 32. The lightening holes 31 and the positioning holes 32 are arranged at equal intervals (intervals of 45°) in the circumferential direction. However, the number of the lightening holes 31, the number of the positioning holes 32, and the arrangement of the lightening holes 31 and the positioning holes 32 are not limited thereto. For example, as shown in Modified Example of FIG. 20, the rotor core 21 may be provided with two positioning holes 32. In this case, the lightening holes 31 and the positioning holes 32 are arranged at equal intervals (intervals of 90°) in the circumferential direction. Further, the shape of the positioning hole 32 is not limited to a circle, and may be a square, a trapezoid, a sector, or the like.

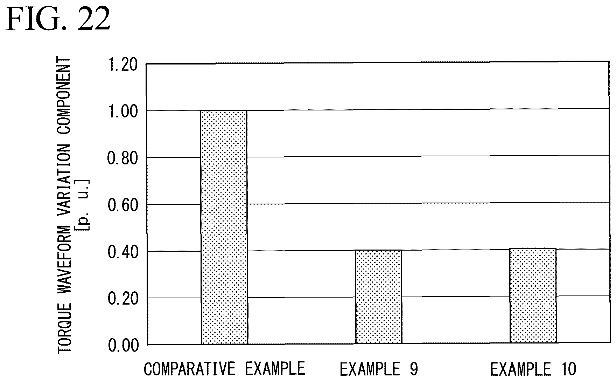

FIG. 19 is a diagram showing a magnetic flux density distribution of a 1/2 model of a permanent magnet synchronous motor 100D according to Example 9 as an example of this embodiment. FIG. 21 is a diagram showing a magnetic flux density distribution of a 1/2 model of the permanent magnet synchronous motor 100D according to Example 10 as an example of this embodiment. FIG. 22 is a graph showing a torque waveform variation component obtained by the permanent magnet synchronous motor 100D according to Examples 9 and 10. The vertical axis of the graph in FIG. 22 indicates the torque waveform variation component [p.u.] normalized based on the torque waveform variation component obtained by the permanent magnet synchronous motor 200 according to Comparative Example.

The permanent magnet synchronous motor 100D according to Example 9 is formed by providing six positioning holes 32 in the rotor core 21 of the permanent magnet synchronous motor 100 according to Example 1. The permanent magnet synchronous motor 100D according to Example 10 is formed by providing two positioning holes 32 in the rotor core 21 of the permanent magnet synchronous motor 100 according to Example 1.

As shown in FIGS. 19 and 21, in the permanent magnet synchronous motor 100D according to Examples 9 and 10, the change in magnetic flux density of the outer peripheral portion of the rotor core 21 decreases compared to Comparative Example. Further, as shown in FIG. 22, in the permanent magnet synchronous motor 100D according to Examples 9 and 10, it can be confirmed that the torque waveform variation component decreases by about 60% compared to the permanent magnet synchronous motor 200 according to Comparative Example. That is, it can be seen that the formation of the positioning hole 32 does not increase the torque waveform variation component and the cogging torque and the torque pulsation can be reduced in the permanent magnet synchronous motor 100D provided with the positioning hole 32.

Additionally, it is possible to combine each embodiment or to modify or omit each embodiment as appropriate.

For example, as the permanent magnet synchronous motor 100, an interior permanent magnetic (IPM) motor in which the plurality of permanent magnets 22 are embedded in the rotor core 21 may be employed.

The positioning hole 32 shown in FIGS. 19 and 21 may be provided in the rotor core 21 according to other embodiments.

[Reference Signs List]

10 Stator
20, 20A, 20B, 20C, 20D Rotor
21 Rotor core
22 Permanent magnet
23 Shaft
31 Lightening hole
32 Positioning hole
100, 100A, 100B, 100C, 100D Permanent magnet synchronous motor
O Axis

**Claims**

1. A rotor comprising:

   a rotor core;
   a shaft which is disposed inside the rotor core and extends in an axial direction; and
   a plurality of permanent magnets which are provided in the rotor core,
   wherein the rotor core is provided with a lightening hole, and
   a number of the lightening hole is different from a number of pole pairs of the plurality of permanent magnets.

2. The rotor according to claim 1,
   wherein the lightening hole extends in a circumferential direction and is disposed such that a center of the lightening hole in the circumferential direction and a center of the permanent magnet in the circumferential direction coincide with each other in the circumferential direction.

3. The rotor according to claim 1,
   wherein the lightening hole extends in a circumferential direction and is disposed such that a center of the lightening hole in the circumferential direction and an intermediate position of permanent magnets, of the plurality of permanent magnets, adjacent to each other in the circumferential direction coincide with each other in the circumferential direction.

4. The rotor according to claim 2 or 3,

   wherein the plurality of permanent magnets are arranged at equal intervals in the circumferential direction, and
   when a separation angle around an axis of the shaft between both ends of the lightening hole in the circumferential direction is $\alpha$ and a separation angle around the axis of the shaft between the centers of permanent magnets, of the plurality of permanent magnets, adjacent to each other in the circumferential direction is $\beta$ in a cross-section orthogonal to the axial direction, the lightening hole is provided to satisfy $\beta \leq \alpha \leq 3\beta$.

5. The rotor according to any one of claims 1 to 4,
   wherein the lightening hole is formed symmetrically with respect to a line connecting an axis of the shaft and a center of the lightening hole in a circumferential direction.

6. The rotor according to any one of claims 1 to 5,

   wherein the rotor core includes a plurality of core plate stacked in the axial direction, and
   the rotor core is provided with a positioning hole which adjusts positions of the plurality of core plates.

7. A permanent magnet synchronous motor comprising:

   the rotor according to any one of claims 1 to 6; and
   a stator which is provided to surround an outer periphery of the rotor.

FIG. 1

FIG. 2

FIG. 3

## FIG. 4

## FIG. 5

FIG. 6

FIG. 7

FIG. 8

FIG. 9

FIG. 10

FIG. 11

## FIG. 12

## FIG. 13

FIG. 14

FIG. 15

# FIG. 16

# FIG. 17

FIG. 18

FIG. 19

FIG. 20

FIG. 21

# FIG. 22

## INTERNATIONAL SEARCH REPORT

| International application No. |
|---|
| **PCT/JP2021/039955** |

**A. CLASSIFICATION OF SUBJECT MATTER**

*H02K 1/278*(2022.01)i
FI: H02K1/278

According to International Patent Classification (IPC) or to both national classification and IPC

**B. FIELDS SEARCHED**

Minimum documentation searched (classification system followed by classification symbols)

H02K1/27

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-48268 A (MITSUBA CORP) 26 March 2020 (2020-03-26) paragraphs [0016]-[0070], fig. 1-20 | 1 |
| Y | | 3-7 |
| X | WO 2017/022021 A1 (MITSUBISHI ELECTRIC CORP) 09 February 2017 (2017-02-09) paragraphs [0010]-[0173], fig. 1-29 | 1-2 |
| Y | | 3-7 |
| X | CN 102593985 A (CHANGAN AUTOMOBILE CO., LTD.) 18 July 2012 (2012-07-18) paragraphs [0026]-[0044], fig. 4-5 | 1-2 |
| Y | | 3-7 |

☐ Further documents are listed in the continuation of Box C.     ☑ See patent family annex.

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2021** | **14 December 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/039955** |

| Patent document cited in search report | | | Publication date (day/month/year) | Patent family member(s) | Publication date (day/month/year) |
| --- | --- | --- | --- | --- | --- |
| JP | 2020-48268 | A | 26 March 2020 | (Family: none) | |
| WO | 2017/022021 | A1 | 09 February 2017 | US 2018/0212484 A1 paragraphs [0039]-[0203], fig. 1-29 CN 107852047 A | |
| CN | 102593985 | A | 18 July 2012 | (Family: none) | |

Form PCT/ISA/210 (patent family annex) (January 2015)

**REFERENCES CITED IN THE DESCRIPTION**

**Patent documents cited in the description**

- JP 2015047051 A